# DEMANDE DE BREVET EUROPEEN

(11) **EP 2 025 509 A1**
(43) Date de publication de la demande: **18.02.2009**
(21) Numéro de dépôt: 07113018.1
(22) Date de dépôt: 24.07.2007
(51) Int. Cl.: B32B 17/10, B60Q 3/02, H05B 3/86

(54) **Vitrage comportant des éléments électroluminescents**

(71) Demandeur: AGC Flat Glass Europe SA, 1170 Bruxelles (Watermael-Boitsfort) (BE)
(72) Inventeur: La désignation de l'inventeur n'a pas encore été déposée
(74) Mandataire: Decamps, Alain René François

(57) **Abrégé**

La présente invention concerne les vitrages comportant des éléments électroluminescents.

Le vitrage comprend au moins une feuille de verre minéral ou organique rigide et au moins une feuille d'un matériau thermoplastique collé à la feuille rigide. Il comporte un ensemble de diodes électroluminescentes incorporé dans la (les) feuille(s) thermoplastique(s), l'alimentation des diodes étant effectuée au moyen de fils métalliques dont le diamètre est inférieur à 300µ, fils qui sont également incorporés dans la (les) feuille(s) thermoplastique(s).

## Description

La présente invention concerne un vitrage comprenant des éléments électroluminescents.

La mise en oeuvre de diodes électroluminescentes dans des vitrages a été présentée antérieurement à des usages variés. Il s'agit notamment de disposer ces diodes à des fins de décoration ou d'éclairage.

Le choix de diodes électroluminescentes pour ces applications s'explique notamment par le fait que les moyens d'éclairage traditionnels ne peuvent être implantés sur des vitrages sans nuire à l'aspect esthétique de "transparence", aspect qui est la raison du choix de vitrages où le recours aux diodes électroluminescentes est perçu comme une manière de conserver autant que possible la transparence en question, permettant la réalisation simultanée d'une certaine consommation électrique.

Au-delà du principe de l'utilisation de telles diodes électroluminescentes se posent diverses questions, et en particulier leur mode d'incorporation et d'alimentation. Il a déjà été proposé d'incorporer des diodes électroluminescentes dans un vitrage feuilleté, et de les alimenter en choisissant d'utiliser essentiellement des couches conductrices minces transparentes. Le choix de ce mode s'explique aisément lorsque les vitrages en question sont déjà revêtus de ces couches pour conférer des fonctions particulières indépendantes de la présence de ces diodes. C'est le cas en particulier des couches conductrices qui ont pour rôle bien connu de filtrer le rayonnement solaire pour en éliminer la plus grande partie des infrarouges, ou encore de servir de moyen de chauffage de ces vitrages. Il existe aussi des cas où la fonction première de la couche conductrice est bien de servir de conducteur amenant le courant aux éléments électroluminescents.

En pratique tous les vitrages ne comportent pas ce type de couche. Par ailleurs la mise en place des diodes électroluminescentes sur ces couches conductrices nécessite un assemblage délicat et la réalisation de circuits non moins délicats. De plus, elles conduisent à des pertes énergétiques par effet Joule dues au simple fait de la conduction au travers de ces couches.

L'invention a pour but de fournir des vitrages comportant des séries de diodes électroluminescentes de façon relativement plus commode à réaliser et bien adaptés à des puissances compatibles avec celles nécessitées notamment pour l'éclairage ou la décoration.

Selon l'invention le vitrage est composé d'au moins une feuille de verre minéral ou organique rigide et d'au moins une feuille d'un matériau thermoplastique collé à la feuille rigide. Les diodes électroluminescentes sont incorporées dans la feuille de matériau thermoplastique et sont alimentées au moyen de fils métalliques conducteurs également incorporés dans la feuille de matériau thermoplastique.

Une première manière d'incorporer les fils d'alimentation et les diodes dans le matériau thermoplastique est d'opérer par calandrage.

Une manière d'incorporation alternative est de fixer les fils sur la surface du matériau thermoplastique sous l'influence d'un rayonnement ultrasonique, après quoi les diodes sont collées ou soudées sur les fils.

Il est connu de réaliser des vitrages automobiles dans lesquels des fils conducteurs sont incorporés pour constituer un réseau chauffant. Ces dispositions sont utilisées notamment pour dégivrer ou désembuer les pare-brise de certains véhicules. Cette solution est choisie pour remplacer l'utilisation de couches minces chauffantes qui présentent des difficultés de réalisation notamment sur des vitrages de grandes dimensions pour lesquels aux épaisseurs compatibles avec une transmission lumineuse suffisante, offrent une résistance trop importante pour conduire à une puissance adaptée aux voltages habituellement utilisés.

Quoi qu'il en soit, il reste préférable d'utiliser des fils aussi discrets que possible, tout en garantissant une conduction suffisante pour éviter notamment un échauffement local qui s'ajoutant à celui occasionné par le fonctionnement des diodes pourrait causer des élévations de température nuisible notamment au matériau thermoplastique dans lequel sont incorporés les diodes et les fils qui les alimentent. En pratique les fils ont un diamètre qui ne dépasse pas 300µ et de préférence pas 200µ. De façon particulièrement préférée les fils alimentant les diodes ont un diamètre de l'ordre de 20 à 100µ.

S'il est avantageux d'utiliser les fils les plus fins possibles pour minimiser la gêne ou le caractère inesthétique liés à leur présence, il est cependant préférable encore de faire en sorte que ces fils offrent une résistance mécanique à la traction suffisante pour supporter les efforts imposés dans les modes d'application préférés décrits plus loin.

Dans les modes antérieurs envisagés pour l'introduction de diodes électroluminescentes alimentées au moyen de circuits constitués dans des couches conductrices, il va de soi que ces couches seules ne sont pas susceptibles de servir de support aux diodes. Autrement dit la fixation des diodes aux moyens d'alimentation doit s'effectuer après que les couches conductrices aient été renforcées par combinaison avec d'autres éléments de structure. La fixation des diodes dans ces conditions est relativement complexe afin de garantir une bonne mise en place des diodes par rapport aux circuits d'alimentation.

Les diodes peuvent être connectées entre elles dans l'assemblage avec le vitrage en mode série ou en mode parallèle. Selon une mise en oeuvre particulière de l'invention, les diodes peuvent être assemblées au vitrage selon une connexion en mode série et en mode parallèle à l'intérieur d'un même vitrage. Il est aussi possible de réaliser au moins un groupe de diodes connectées en mode série avec au moins un groupe de diodes connectées en mode parallèle. Des combinaisons de groupes multiples divers sont possibles dans les deux modes.

L'invention est décrite de façon détaillée dans la suite en faisant référence aux planches de dessins dans lesquelles:
- la figure 1 représente sous forme schématisée, une structure typique de vitrage selon l'invention;
- la figure 2 est un schéma rappelant un mode de réalisation de l'incorporation de fils portant des diodes dans une feuille thermoplastique;
- la figure 3a illustre un mode de préparation de fils d'alimentation supportant une série de diodes;
- la figure 3b illustre un mode de préparation des fils d'alimentation supportant des diodes mises en parallèle
- la figure 4 représente de façon schématique en coupe un mode de réalisation d'un vitrage selon l'invention
- la figure 5 est analogue à la figure 4 et présente un autre mode d réalisation d'un vitrage selon l'invention.

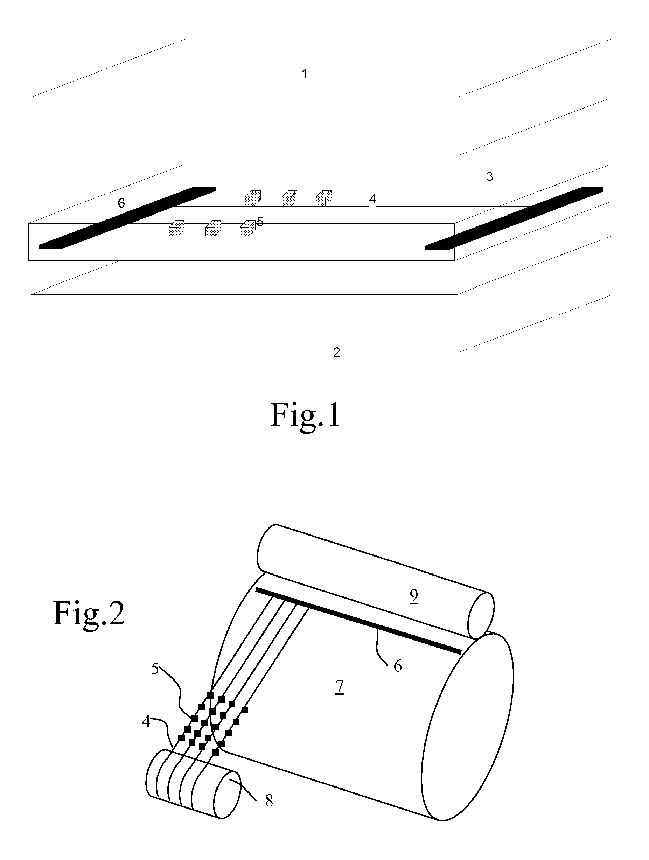

La figure 1 présente un vitrage en vue "éclatée" pour bien illustrer la disposition relative des divers constituants entrant dans la composition du vitrage. Celui-ci dans le mode présenté comprend deux feuilles (1,2) transparentes rigides de verre minéral ou organique. Ces feuilles dans le vitrage sont réunies au moyen d'une feuille intercalaire thermoplastique 3, suivant les modalités usuelles pour la constitution de vitrages feuilletés. Les matériaux traditionnellement utilisables à cet usage peuvent être employés selon l'invention. Il s'agit notamment de résines polyacétals notamment de résines de polyvinyl butyrals (PVB). Il s'agit aussi de poly-chlorures de vinyle (PVC) ou d'acétate de poly-vinyl (EVA)...

Une fois assemblées les feuilles intercalaires(3) réunissant les deux feuilles rigides (1,2) sont également parfaitement transparentes.

Les feuilles de verre sont soit claires soit colorées. L'intercalaire (3) peut également être coloré.

Dans le mode représenté à la figure 1 le vitrage est destiné à constituer une dalle d'éclairage et les diodes forment les moyens d'éclairage. Pour cela les diodes (5) chacune de puissance limitée sont réparties sur la surface de la dalle. Cette disposition qui fait que dans les modes traditionnels de lampes à incandescence la source lumineuse est plus ou moins ponctuelle, peut bien évidemment être changée dans la mesure où les diodes ne sont pas nécessairement rassemblées sur un petit espace. Il peut être préféré de distribuer ces sources lumineuses que constituent les diodes, notamment de manière à couvrir une part significative de la surface du vitrage. Une telle disposition est particulièrement recherchée pour disposer d'un éclairage moins éblouissant, ou même éventuellement moins comme éclairage que pour créer une ambiance lumineuse plus douce. Dans ces distributions les diodes peuvent être uniformément distribuées sur la surface ou une partie de la surface du vitrage, elles peuvent également reproduire un motif défini selon leurs positions relatives les unes par rapport aux autres.

Selon le type de lumière ou l'utilisation qui en est faite, en plus de la localisation des diodes, il est aussi avantageux de choisir leur puissance respective. Pour les éclairages d'ambiance il est préféré d'utiliser un nombre important de diodes bien réparties, ces diodes pouvant alors présenter individuellement une puissance lumineuse limitée. Pour des éclairages plus localisés, éventuellement ponctuel, ou comportant un nombre limité de diodes, les diodes offrent avantageusement des puissances sensiblement plus importantes.

Dans le mode présenté à la figure 1, les diodes (5) sont assemblées par groupes alignés le long de fils d'alimentation (4). Ces fils d'alimentation sont raccordés eux-mêmes à des conducteurs 6 situés des deux côtés du vitrage. Ces conducteurs ("bus bar") sont constitués de manière traditionnelle soit par des fils, rubans, tresses ou encore bandes conductrices émaillées. Dans ce dernier cas elles sont situées sur la feuille de verre (1) et non comme représenté sur l'intercalaire (3).

Le contact entre les fils (4) et les conducteurs (6) est obtenu de manière usuelle au moyen de colle conductrice, soudure ou par simple contact les fils (4) venant s'appliquer sous pression du fait de l'assemblage des feuilles.

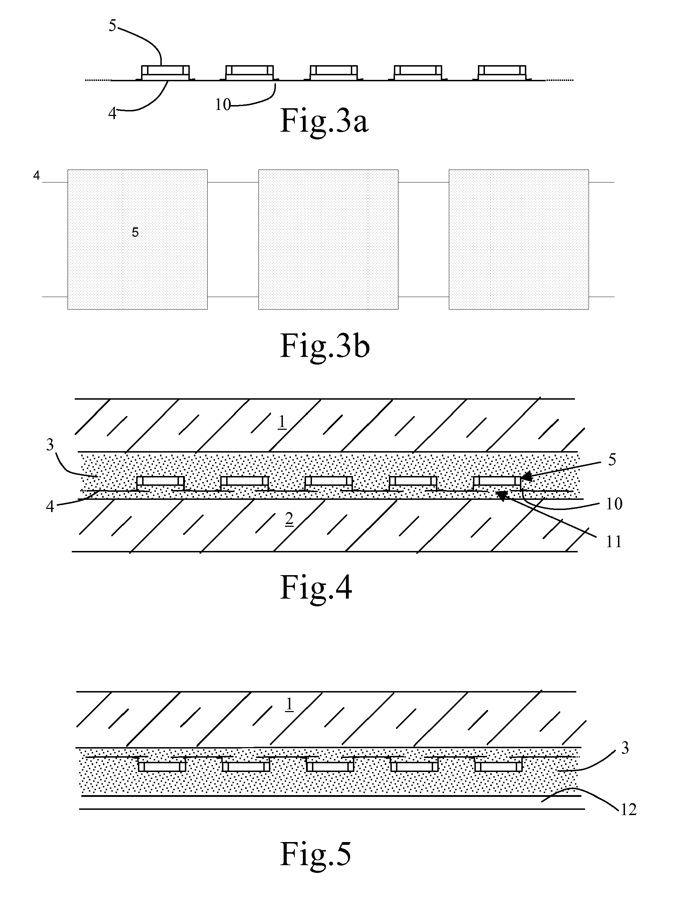

La figure 4 présente en coupe la disposition des divers éléments entrant dans la constitution du vitrage après l'assemblage. Dans le cas présenté, les diodes(5) dont l'épaisseur est choisie de telle sorte qu'elle ne dépasse pas celle de la feuille intercalaire (3) sont englobées dans le matériau thermoplastique de cette feuille. Du fait de sa plasticité le matériau au moment de l'assemblage se conforme pour épouser le contour des diodes. Les diodes de petites dimensions sont bien enveloppées par le matériau de l'intercalaire.

La figure 4 montre une série de 5 diodes alimentées par le même fil 4. Lorsque, comme à la figure 1 plusieurs séries de diodes sont disposées à proximité les unes des autres, il serait possible de placer des diodes à cheval sur deux fils contigus, autrement dit les diodes seraient alors montées en parallèle. L'avantage de la structure en série est que les diodes usuelles présentent des caractéristiques individuelles qui peuvent différer sensiblement de l'une à l'autre, soit dès l'origine, soit au cours de leur vie. Dans ces conditions le risque est de discerner des luminosités différentes de l'une à l'autre. Bien que cette éventualité ne soit pas incompatible avec la fonction d'éclairage, il est préférable pour des raisons d'esthétique que chaque diode de l'ensemble présente une apparence sensiblement identique lorsqu'elles sont en fonctionnement. La disposition en série garantit donc que les diodes sont parcourues par une intensité égale le long d'un même fil, et par suite développent une luminosité sensiblement égale.

Dans la disposition en série le risque est d'avoir une diode défaillante ce qui conduit à l'interruption de fonctionnement de toute la série. L'avantage de la structure en parallèle comme décrite à la figure 3b est donc d'assurer une continuité fonctionnelle dans le cas où une diode venait à défaillir, tout en limitant la tension d'alimentation nécessaire au fonctionnement de l'ensemble des diodes.

La réalisation des fils portant les diodes peut se faire selon deux schémas de procédé différents.

Le premier consiste en l'incorporation préalable des diodes dans la feuille intercalaire. Les diodes sont avantageusement fixées sur le fil conducteur (4) comme présenté à la figure 3a. La fixation est obtenue de manière traditionnelle par exemple au moyen de colle conductrice ou de soudure sur les pattes (10) des diodes. Il est ordinairement plus aisé de procéder à la fixation sur un fil continu comme représenté à la figure 3, que de constituer une chaîne de diodes à partir de tronçons successifs de fils conducteurs. Bien évidemment en procédant de cette façon, il est nécessaire ultérieurement de rompre le fil comme représenté en (11) à la figure 4, entre les deux pattes de (10) de chaque diode. La rupture du fil peut intervenir dès l'origine sur le fil auquel sont fixées préalablement les diodes mais avant incorporation dans la feuille intercalaire. Il est aussi possible de procéder à la coupure (11) après mise en place du fil et des diodes dans la feuille intercalaire. Le premier mode de découpe présente une commodité certaine pour la rupture du fil et permet d'éviter les contacts ultérieurs susceptibles de court-circuiter accidentellement une diode.

Quel que soit le mode choisi l'incorporation dans une feuille intercalaire peut être conduite sur le mode antérieur utilisé pour l'incorporation de fils chauffants. Ce mode est présenté à titre indicatif de façon schématique à 1 figure 2.

Selon ce mode une feuille intercalaire est enroulée sur un tambour (7) éventuellement les conducteurs (6) sont préalablement disposés sur la feuille intercalaire. Les fils (4) portant les diodes (5) sont dévidés sous tension à partir d'une bobine (8). Pour faciliter l'incorporation des fils et de diodes ceux-ci peuvent éventuellement être chauffés au préalable. Un rouleau (9) formant calandre avec le tambour (7), est aussi avantageusement utilisé pour presser les fils et les diodes dans le matériau thermoplastique de la feuille intercalaire.

Dans la présentation l'ensemble des fils est appliqué en un seul passage. Il est aussi possible de procéder à la mise en place fil à fil.

L'incorporation achevée les feuilles intercalaires (3) sont assemblées avec les feuilles rigides de manière traditionnelle, notamment par étuvage sous pression. Les températures au cours de cet assemblage finissent l'enrobage des diodes dans le matériau thermoplastique en même temps quelles assurent le collage des feuilles entre elles.

Un autre schéma de procédé pour la mise en place des fils et diodes, non représenté, consiste en l'application de ces fils et diodes sur une feuille intercalaire selon la disposition recherchée, la fixation étant effectuée de façon ponctuelle le long de ces fils, par exemple par fusion locale de l'intercalaire. Les fils mis en position et maintenu par ces points de soudage à l'intercalaire peuvent ensuite être directement soumis à l'opération d'assemblage des feuilles, assemblage au cours duquel la pression et la température conduit à l'incorporation dans la feuille intercalaire.

La figure 4 présente un vitrage assemblé comportant une feuille intercalaire (3). Les épaisseurs des feuilles intercalaires disponibles de façon courante sont inférieures à 1mm. Les feuilles de PVB par exemple sont commercialisées à 0,38 et 0,76mm. Pour faire en sorte qu'elles soient bien enveloppées dans le matériau intercalaire, l'épaisseur de celui-ci doit être évidemment au moins égale, et de préférence un peu supérieure.

Quel que soit le mode d'assemblage des vitrages selon l'invention, tous ces modes comprenant nécessairement une mise sous pression des feuilles constituant l'assemblage, les diodes sont soumises à des contraintes qui ne doivent pas créer de risque de détérioration. Pour cela il est préférable de faire en sorte que l'épaisseur de la feuille ou des feuilles intercalaires utilisées, soit supérieure à celle des diodes, avec une surépaisseur choisie judicieusement. Cette marge d'épaisseur évite l'écrasement des diodes entre des feuilles rigides lors de l'assemblage. La nature de la technique d'assemblage conduit aussi à des pressions plus ou moins contraignantes. Selon les dimensions les formes et le type de vitrage, il est possible de procéder par calandrage, dans des enveloppes de compression sous vide...

L'assemblage peut être conduit avec une ou plusieurs feuilles de matériau thermoplastique. Dans l'hypothèse de deux feuilles intercalaires, (mode non représenté), il est préférable de disposer les fils et les diodes entre les deux feuilles en question. De cette façon l'enveloppement des diodes est particulièrement bien assuré.

Si le plus souvent les vitrages selon l'invention sont composés de deux feuilles rigides (1,2), il est également possible de procéder à un assemblage d'une feuille rigide avec une ou plusieurs feuilles d'un matériau souple. Il est connu de produire de cette façon ce qui est désigné communément sous le nom de vitrage "bilayer". Le matériau souple est par exemple un polyuréthane, matériau qui tout en étant souple peut présenter une bonne résistance aux rayures ou un caractère "auto-cicatrisant".

D'autres matériaux sont également susceptibles de conduire à un assemblage ne comportant qu'une feuille rigide (1). La figure 5 schématise en coupe un matériau de cette nature qui comporte par exemple en plus de la feuille rigide, une feuille d'un matériau traditionnellement utilisé pour constituer des feuilletés, notamment une feuille de PVB (3), feuille qui est protégée des rayures du coté opposé à celui de la feuille rigide (1) par une feuille protectrice plus "dure" (12). Cette dernière est avantageusement constituée d'un polymère et présente une épaisseur suffisamment petite pour se conformer au galbe de la feuille rigide qui impose la forme générale. Cette structure présente également l'avantage de présenter un poids total de la structure plus faible. Des feuilles (3) et (12) sont disponibles dans le commerce sous forme pré-assemblée. C'est le cas par exemple des produits commercialisés par la société Dupont sous la marque "Sentry^{®}". Il est possible bien évidemment de procéder à l'assemblage à partir de plusieurs feuilles séparées. Dans tous les cas l'incorporation des fils et diodes est conduit comme indiqué ci dessus.

## Revendications

1. Vitrage comprenant au moins une feuille de verre minéral ou organique rigide et au moins une feuille d'un matériau thermoplastique collé à la feuille rigide, le vitrage comportant un ensemble de diodes électroluminescentes incorporé dans la (les) feuille(s) thermoplastique(s), **caractérisé en ce que** l'alimentation des diodes est effectuée au moyen de fils métalliques dont le diamètre est inférieur à 300µ, fils qui sont également incorporés dans la (les) feuille(s) thermoplastique(s).

2. Vitrage selon la revendication 1 dans lequel les diodes électroluminescentes sont assemblées en une ou plusieurs séries disposées le long d'un fil d'alimentation.

3. Vitrage selon la revendication 1 dans lequel les diodes électroluminescentes sont assemblées en parallèle sur au moins deux fils contigus.

4. Vitrage selon une quelconque des revendications 1 à 3, **caractérisé en ce qu'**au moins une partie des diodes sont assemblées selon un mode de connexion série et au moins une autre partie de ces diodes sont assemblées selon un mode de connexion parallèle.

5. Vitrage selon une quelconque des revendications 2 à 4 dans lequel le(s) fil(s) d'alimentation et les diodes qu'ils alimentent sont incorporés dans la (les) feuille(s) de matériau plastique par une opération de calandrage.

6. Vitrage selon une quelconque des revendications 2 à 5, dans lequel les fils d'alimentation sont fixés sur la surface du matériau thermoplastique sous l'influence d'un rayonnement ultrasonique, après quoi les diodes sont collées ou soudées sur les fils.

7. Vitrage selon une quelconque des revendications 5 ou 6, dans lequel les fils et les diodes électroluminescentes qu'ils alimentent sont incorporées dans la (les) feuille(s) thermoplastique dans une opération précédant l'assemblage avec la ou les feuilles rigides de verre minéral ou organique.

8. Vitrage selon l'une des revendications précédentes dans lequel les fils d'alimentation s'étendent d'un bord à l'autre du vitrage et sont raccordés à des alimentations longeant les bords du vitrage.

9. Vitrage selon l'une des revendications précédentes dans lequel la (les) feuille(s) thermoplastique(s) réuni(ssen)t deux feuilles de verre organique ou minéral.
